# EUROPEAN PATENT APPLICATION

(11) **EP 4 640 456 A1**
(43) Date of publication of application: **29.10.2025**
(21) Application number: 24172591.0
(22) Date of filing: 25.04.2024
(51) Int. Cl.: B60J 1/20, B60J 7/00

(54) **METHOD FOR OPERATING A ROLLER BLIND ASSEMBLY**

(71) Applicant: Inalfa Roof Systems Group B.V., 5807 GW Oostrum (NL)
(72) Inventor: van Mourik, Marco, 5807 GW Oostrum (NL)
(74) Representative: De Vries & Metman

(57) **Abstract**

The invention relates to a method for operating a roller blind assembly, wherein the roller blind assembly is configured for direct driving of a winding tube and a rollo screen movable between a closed position and an opened position. The method includes operating a motor to drive the winding tube of the rollo assembly, setting a first threshold based on an operating condition, and monitoring an operating parameter indicative of speed of the winding tube. Further including assessing when the operating parameter crosses the first threshold, and generating a trigger signal based on the assessment of the operating parameter.

## Description

The present invention relates to a roller blind assembly and in a particular to a method for operating such a roller blind assembly. The invention further relates to a roller blind assembly having a control unit configured for carrying out such a method.

### BACKGROUND

Vehicles, such as e.g. passenger cars, may be equipped with a roof or roof system having one or more roof panels. The roof panels may be movable between closed and open positions wherein a roof opening is covered or uncovered, or the roof panels may be fixed. In either case, one or more of the roof panels may be transparent to allow light to enter a passenger compartment of the vehicle. In order to be able to control the amount of light entering, the vehicle may be equipped with a roller blind assembly including a blind screen that is movable between closed and open positions, and any position therebetween i.e. partially closed or partially open. Movement of the er blind screen is enabled by wounding on or off a winding tube or shaft. In a fully opened position, the blind screen is completely wound upon the winding tube. In the closed position, the blind screen is, almost, completely wound off from the winding tube. The roller blind assembly may also be referred to as a rollo assembly, likewise a blind screen may be referred to as a rollo screen.

In known roller blind assemblies the rollo screen may be operated by drive cables driven by a motor, which drive cables are connected via slide shoes to an operating beam of the rollo screen. The operating beam may also be referred to as a pull beam, as it may pull the rollo screen, or it may further be referred to as a front beam, this in relation to its position relative to the front of the vehicle. The motor will drive movement of the drive cables, thereby moving the drive shoes and connected operating beam. Hence, pulling the pull beam away from the winding tube will roll off the rollo screen from the winding tube. Whereas pulling the pull beam towards the winding tube, will allow the rollo screen to wind up on the winding tube. Thereto, the winding tube is usually provided with a springlike assembly to enable the winding up of the rollo screen when uncovering the roof opening by the rollo screen. The position of the slide shoes and therewith of the front beam i.e. pull beam may be directly detected in relation to the rotation of the motor and the associated travel of the drive cables.

In order to avoid 'light bleeding', that is the amount of light that is not prevented from passing when the rollo screen is fully closed, or the amount of light that is prevented from passing when the rollo screen is fully opened, the position of the operating beam needs to be known.

However, in roller blind assemblies wherein instead the movement of the rollo screen is operated by a motor directly driving the winding tube of the rollo screen, no drive cables are present and accordingly the position of the operating beam may not be detected in a straightforward manner. Accordingly, there is a need for an alternative manner of determining the position of the front end of the rollo screen and/or of the operating beam.

### SUMMARY OF INVENTION

It is an object of the invention to provide a method for operating a direct driven roller blind assembly.

In particular, such as roller blind assembly will have means, such as a springlike element, to ensure that the rollo screen is maintained taut by tensioning wires. Accordingly, as the inventors have discovered, a bump or block of an operating beam running against or close to the side of an opening that is to be covered, will be dampened by the springlike element and may not or not easily be detected.

In one aspect, the invention relates to a method for operating a roller blind assembly wherein the roller blind assembly is configured for direct driving of a winding tube and a rollo screen that is movable between a closed position and an opened position. The method including operating a motor to drive the winding tube of the rollo assembly with a first rotational direction; setting a first threshold based on an operating condition, the operating condition indicating whether the rollo screen moves in a first direction or a second direction. Monitoring an operating parameter indicative of speed of the winding tube, assessing when the operating parameter crosses the first threshold, and generating a trigger signal based on the assessment of the operating parameter.

In a further aspect, the invention relates to a method further including setting a second threshold based on the operating condition, the operating condition indicating whether the rollo screen moves in the first direction or a second direction, wherein the first threshold is associated with the first direction and the second threshold is associated with the second direction, and assessing the operating parameter for crossing the first or second threshold in dependence of the operating condition.

In yet a further aspect, the invention relates to a method further including determining at least one environmental condition, and adjusting the threshold value in accordance with the determined environmental condition. Wherein the at least one environmental condition may include temperature of the motor, temperature of surroundings, temperature of the vehicle interior, vehicle speed, and/or vehicle system operating voltage.

In another aspect, the invention relates to a control unit for a roller blind assembly that is configured for executing the method for controlling the roller blind assembly as disclosed.

In yet another aspect, the invention relates to roller blind assembly having a rollo screen that is movable between a closed position and an opened position, and having a control unit that is configured for executing the method for controlling the roller blind assembly as disclosed.

In another aspect, the invention relates to a roller blind assembly for a vehicle, including a winding tube configured to be directly driven by a motor, a rollo screen configured to be wound up and off on the winding tube at one side and having an operating beam at an opposite side, the rollo screen being movable between a closed position and an opened position by driving the winding tube, and a control unit configured for executing the method for controlling the roller blind assembly as disclosed.

In a further aspect, the invention relates to a roller blind assembly further including wire pulleys on opposite outer ends of the winding tube, a springlike element within the operating beam, and tensioning wires connected at first ends to one of the respective wire pulleys and connected at second ends to the springlike element.

In another aspect, the invention relates to a roller blind assembly further including wire pulleys on opposite outer ends of the winding tube, a springlike element having a pulley arranged on each respective outer end, and tensioning wires connected at first ends to one of the respective wire pulleys and connected at second ends to the operating beam. And wherein the tensioning wires run along the pulleys of the springlike element, such that the springlike element tensions the tensioning wires.

Particular embodiments of the invention are set forth in the dependent claims.

Further aspects, effects and details of particular embodiments of the invention are described in the following detailed description of a number of exemplary embodiments, with reference to the drawings.

### BRIEF DESCRIPTION OF DRAWINGS

By way of example only, the embodiments of the present disclosure will be described with reference to the accompanying drawings, wherein:
FIG. 1 illustrates a perspective view of an example of a vehicle roof with an open roof assembly and roller blind assembly;
FIG. 2 illustrates a perspective view of an example of a roller blind assembly in closed position for use with the roof assembly of Fig. 1;
FIG. 3 illustrates an exploded view of the rollo assembly of Fig. 2;
FIG. 4 illustrates an example of a method for operating the rollo assembly in accordance with the invention;
FIG. 5A and 5B illustrates exemplary graphs of an operating parameter of a winding tube, when closing and opening respectively;
FIG. 6 illustrates further steps of an example of a method for operating the rollo assembly in accordance with the invention;
FIG. 7 is a flow chart of another example of a method in accordance with the invention;
FIG. 8 illustrates an exploded view of another embodiment of a rollo assembly;
FIG. 9 illustrates an exploded view of a further embodiment of a rollo assembly; and
FIG. 10 illustrates an exploded view of yet another embodiment of a rollo assembly.

### DETAILED DESCRIPTION

In the following description spatial references as, for example, front, side and rear, or underneath, below and above, or forward and rearward direction and driving movement, are made with regard to the general orientation of a vehicle, such as a passenger car. And in particular to a driver behind a steering wheel of such as vehicle. In addition, X-, Y- and Z-direction will refer to a direction corresponding to length, width and height of a vehicle. In the figures, a forward driving movement of a vehicle may e.g. be indicated by an arow D1, pointing in a direction towards a front side of vehicle.

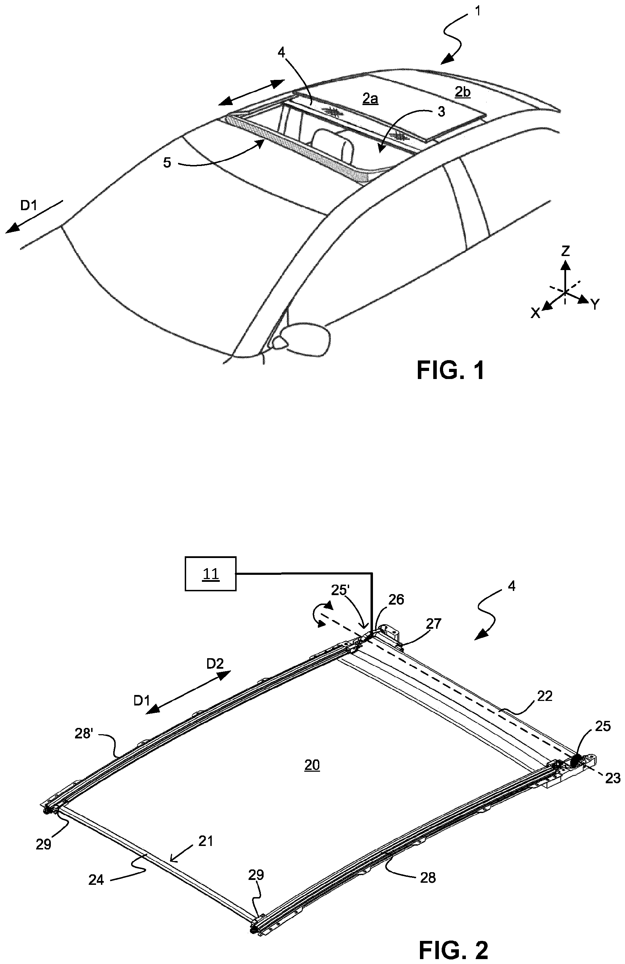

Fig. 1 illustrates a vehicle roof having an open roof assembly 1 arranged therein. The open roof assembly 1 includes a moveable panel 2a and a fixed panel 2b. The moveable panel 2a is also referred to as a closure member, since the moveable panel 2a is moveable over a roof opening 3 such to enable to open and to close the roof opening 3. A wind deflector 5 is arranged at a front side of the roof opening 3. Below the vehicle roof, a roller blind assembly i.e. rollo assembly 4 is located having a rollo screen, which is movable between a closed and an open position. This allows to control the amount of daylight the interior is exposed to through the roof opening 3 or, in case of a transparent panel 2a, through the panel 2a.

In the illustrated embodiment, the moveable panel 2a may be in a closed position, which is a position wherein the moveable panel 2a is arranged over and closes the roof opening 3 and thus usually is arranged in a plane of the vehicle roof 1. Further, the moveable panel 2a may be in a tilted position, which is a position wherein a rear end of the moveable panel 2a is raised as compared to the closed position, while a front end of the moveable panel 2a is still in the closed position. Further, the moveable panel 2a may be in an open position, which is a position wherein the moveable panel 2a is slid open and the roof opening 3 is partially or completely exposed. In the open position, for example both the rear end and front end may be raised as compared to the closed position.

In other embodiments, instead of one or more movable panels, the panels 2a and 2b may both be fixed or there may be a single panel that is fixed. In any of these embodiments a rollo assembly as described in more detail below may be implemented.

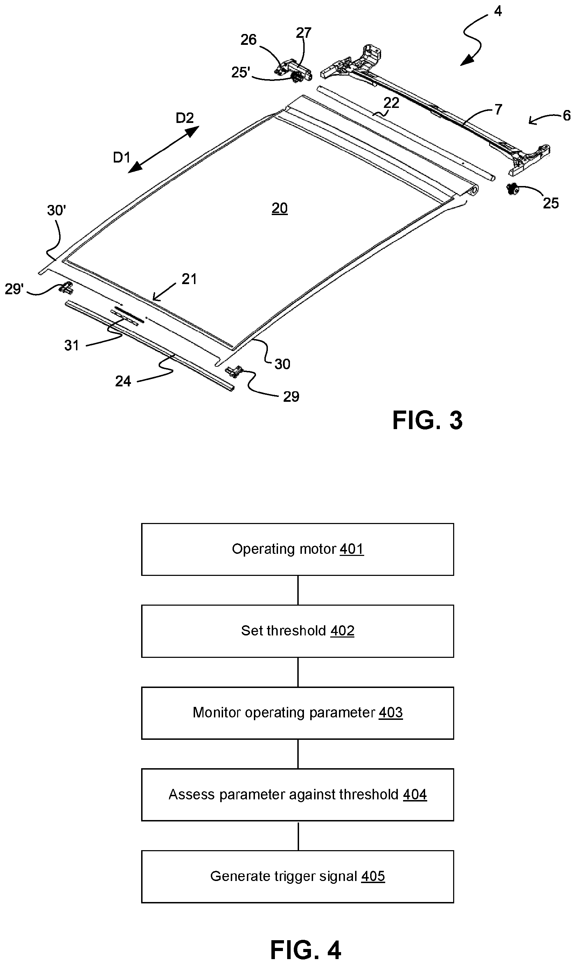

Referring to Figs. 2 and 3, the rollo assembly 4 of Fig. 1 is shown in more detail. In Fig. 2 the rollo assembly 4 is shown in an assembled state and in Fig. 3 shows an exploded view. As indicated, the rollo assembly 4 may act as a sunscreen or sun blind assembly and may be positioned below the movable roof panel 2a or, for example, below both the movable and fixed roof panel 2a, 2b. In other embodiments, there may be a single fixed transparent panel with the rollo assembly positioned there below. In order to mount it below the roof panels, it may be connected to a frame of the roof assembly 1 of Fig. 1B, or it may form an integrated part of the roof assembly 1.

The rollo assembly 4 includes a rollo screen 20 and a winding tube 22 which is rotatable around a stationary axis of rotation 23. The rollo screen 20 extends substantially in a first direction D1 and is connected to an operating beam 24. In an opposite second direction D2, the rollo screen is connected to the winding tube 22. The rollo screen 20 may be wound off and on the winding tube 22. The winding tube 22 is provided with wire pulleys 25, 25' on opposite outer ends, which wire pulleys 25, 25' rotate concentric with the winding tube 22 about axis 23. For mounting on the respective outer ends of the winding tube 22 each wire pulley 25, 25' may have a tube support. At least one of the wire pulleys 25, 25' has a cavity into which an output shaft of a gearbox 26 may be releasable connected. The inner surface of the cavity and the outer surface of the shaft correspond to provide a form locked connection. The inverse, a wire pulley with shaft and gearbox with corresponding cavity is also possible. A motor 27 is provided for driving rotation of the winding tube 22 via the gearbox 26.

The rollo assembly 4 further includes two parallel arranged rollo guides 28, 28' two reversal pulleys 29, 29' and two tensioning wires 30,30' on respective sides of the rollo screen 20. Each tensioning wire 30, 30' runs respectively from one of the wire pulleys 25, 25' around one of the reversal pulleys 29, 29' towards the operating beam 24. Thereto, the reversal pulleys 29, 29' are attached to the respective guides 28, 28'. Where appropriate, pulleys may take the form as rotatable wire guide elements, such as e.g. having a circular disk shape, or as fixed wire guide elements, as e.g. a groove, slot, notch or other shape.

Each tensioning wire 30, 30' is attached to one respective wire pulley 25, 25' with a first end, such that it may be wound onto and off said wire pulley 25, 25'. The tensioning wires 30, 30' are guided through or may at least run through the parallel guides 28. Each wire pulley 25, 25', which is attached to a first end of the respective tensioning wire 30, 30', is further equipped with spiral grooves, such that the tensioning wire 30, 30' may be wound onto and off said wire pulley 25, 25' in a controlled manner. The grooves are provided on a sloped part of the wire pulley 25, 25' and run in a spiral manner over the outer surface of the pulley. The tensioning wires 30, 30' are attached to one another with their respective other, second ends, at a position near the operating beam 24, through a springlike element, here a pull spring 31, which in this case is inside operating beam 24. In other embodiments, further described below, the springlike element may be located at other positions while maintaining each of the tensioning wires under tension. The springlike element may also be implemented in various ways, such as a coil spring, a stretching rubber part, or other elastomeric material that facilitates a tensioning force.

When moving from the closed position to a partially or fully opened position, the rollo screen 20 is wound up on the winding tube 22 when it is rotated by the motor 27, while the tensioning wires 30, 30' are wound off from the wire pulleys 25, 25'. Accordingly, the operating beam 24 is pulled by the rollo screen 20 that is being wound up on the winding tube 22 along the rollo guides 28 in the second direction D2.

When moving from the partially or fully opened position to the closed position, the rollo screen 20 is wound off from the winding tube 22 when it is rotated by the motor 27, while the tensioning wires 30, 30' are wound up on the wire pulleys 25, 25'. The operating beam 24 is pulled by the tensioning wires 30, 30' along the rollo guides 25 in the first direction D1.

Hence, when the exposed surface of the rollo screen 20 shortens when wound up, the tensioning wires 30, 30' extend as they wound off from the wire pulleys 25, 25'. And when the exposed surface of the rollo screen 20 extends when wound off, the tensioning wires 30, 30' shorten as they wound up on the wire pulleys 25, 25'. The winding tube may be configured such that the rotational direction of the winding tube is chosen clockwise for one of the closing or opening motions, whereas consequently the rotational direction will be counterclockwise for the opposite opening or closing motion.

As will be understood the wire pulleys are in a rotational sense in fixed engagement with the winding tube. The wire pulleys may also be removable in axial direction from the winding tube, for example by a multiple of protrusions that extend in radial direction from a part of the wire pulley and extend into slot holes provided in the winding tube. This will ensure that any rotational forces applied via the wire pulleys are transferred to the winding tube, and vices versa, depending on the gearbox output shaft setup. In a single motor setup, the torque of the gearbox output shaft may be transferred directly to one of the wire pulleys or, alternatively the gearbox output shaft may extend into the winding tube and engage the winding tube directly and engage the wire pulley indirectly. Either way, the tensioning wire attached to this wire pulley and the one on the opposite side of the winding tube are rolled up and unrolled from the respective wire pulley. As the respective tensioning wires are attached at their opposite side to the spring inside or at least near the operating beam, the spring will keep the rollo screen taut in every position that the operating beam may be in; in and/or between a fully unrolled and fully rolled up rollo screen. A dependable fixing between the winding tube and each of the wire pulleys is relevant in order to avoid slack in the rollo screen.

The rollo assembly 4 further includes a frame part 6 for carrying the winding tube 22 and pulleys 25, 25', the gear box 26 and motor 27, and for mounting the rollo guides 28. The frame part 6 enables alignment of the rollo guides 28, rollo screen 20 and winding tube prior to assembly in a vehicle roof; thereby creating a subassembly. The frame part 6 may further include at least one roll-off edge 7, intended to support the cloth of the rollo screen 20. The roll-off edge, as well as the operating beam, may be curved in z-direction corresponding to a curvature of the vehicle roof. Accordingly, the roll-off edge is positioned such that it shapes and/or tensions the cloth of the rollo screen to follow the roof curvature. The positioning of the roll-off edge may further take in account that when the rollo screen is wound up or off from the winding tube, the diameter of the cloth on the winding tube reduces and accordingly the angle at which the cloth runs over the roll-off edge changes. In some configurations, one or more additional roll-off edges may be implemented.

A control unit 11 is schematically illustrated and is operatively coupled to the drive motor 27. The control unit 11 may be any kind of processing unit, either a software controlled processing unit or a dedicated processing unit, like an ASIC, as well known to those skilled in the art. The control unit 11 may be a stand-alone control unit or it may be operatively connected to an-other control unit, like a multipurpose, generic vehicle control unit. In yet another embodiment, the control unit 11 may be embedded in or be part of such a generic vehicle control unit. Essentially, the control unit 11 may be embodied by any control unit suitable for, capable of and configured for performing operation of the drive motor 27 and thus the moveable rollo assembly 4.

Referring to Fig. 4, an example of a method for operating the roller blind assembly i.e. rollo assembly is illustrated. In line with the example of the rollo assembly as described above, the rollo assembly is configured for direct driving of a winding tube and a rollo screen movable between a closed position and an opened position. The method includes operating 401 a motor to drive the winding tube of the rollo assembly with a first rotational direction. Further setting 402 a first threshold based on an operating condition. The operating condition indicating whether the rollo screen moves in a first direction or a second direction.

The first direction may refer to a closing or forward direction, that is if the winding tube is located at the rear, in relation to the rear of the vehicle, of the opening, the blind screen moving to close the opening will move towards the front of the vehicle and hence, forward to the front of the opening. The second direction may refer to an opening or rearward direction, that is if the winding tube is located at the rear, in relation to the rear of the vehicle, of the opening, the blind screen moving to expose i.e. open the opening will move towards the rear of the vehicle and hence, rearward to the rear of the opening. Similarly, the first threshold may either refer to a threshold relating to the front side or to the rear side. As will be understood, these directional indications may change with the location of the winding tube. The rotational direction of the motor and therewith the winding tube, depending on the chosen configuration, will either wind up or wind off the rollo screen and therewith open or close the opening.

The method further includes monitoring 403 an operating parameter indicative of speed of the winding tube. And assessing 404 the operating parameter for crossing the first threshold. Which is followed by generating 405 a trigger signal based on the assessment of the operating parameter. The crossing of the threshold may include falling below the threshold and/ or exceeding the threshold, depending on the type of parameter that is monitored. For example, in case of deceleration being monitored it may be checked if that exceeds the threshold, or if a negative acceleration falls below the threshold, or if a torque increase exceeds the threshold.

In another embodiment, the method may, in addition to the example of Fig.4, further include setting a second threshold based on the operating condition, the operating condition still indicating whether the rollo screen is moving in the first direction or a second direction. In this embodiment, the first threshold may be associated with the first direction, for example forward direction, and the second threshold may be associated with the second direction, for example rearward direction; or vice versa. Then the method further includes assessing the operating parameter for crossing the first or second threshold in dependence of the operating condition.

In another embodiment, the method may further include setting the threshold, or adjusting the set first threshold, in relation to an estimated position of the rollo screen. For example, when moving from the open position to the closed position, the threshold set for the front may be adjusted to be less sensitive while returning to the set first threshold when nearing the front edge of the opening. This would allow to prevent interference with rollo motor control operation when experiencing e.g. frictional forces while moving to the closed position.

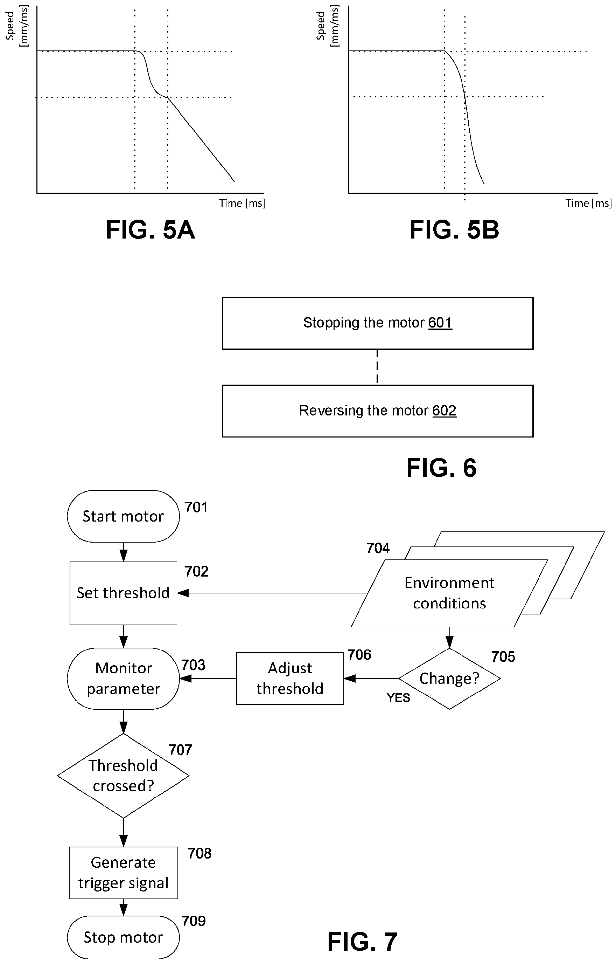

Referring to Figs. 5A and 5B, exemplary graphs of an operating parameter indicative of speed of a winding tube are illustrated respectively when closing Fig. 5A and opening Fig. 5B. These graphs are merely to illustrate the difference in the effect on speed of the winding tube when the roll screen is closing and opening and approaches respectively the front or the rear end position. The operating parameter indicative of speed of the winding tube may be measured directly with a suitable sensor, such as e.g. via Hall sensors. Or it may be measured indirectly from e.g. the pulley speed. Or it may be derived indirectly from the motor operating voltage or current signals, for example when Pulse width modulation PWM control is applied. Furthermore, the operating parameter may also be a software defined parameter that is e.g. derived from or related to motor conditions.

When the rollo screen moves in the closing direction and bumps onto the end of the rollo guides or the edge of the opening, the operating beam halts and the rollo screen may start sagging if the motor and winding tube are not halted. Due to the arrangement with the springlike element, after an initial rather abrupt bump a more gradual drop follows as the spring will absorb some of the impact energy, as a result the speed of the winding tube will not drop to stand still immediately but may decrease gradually, as seen in Fig. 5A. Thus, the springlike element may seem to provide a type of cushioning effect.

Vice versa, when the rollo screen moves in the opening direction and bumps onto the winding tube when it is fully or nearly fully, wound up on the winding tube, the operating beam halts and the rollo screen may start stretching if the motor and winding tube are not halted. The springlike element will not be impacted as the winding tube and therewith the pulleys carrying the tensioning wires are halted. Due to the operating beam halting, this bump occurs more prominent then when closing, as seen in Fig. 5B. Again, the speed of the winding tube will not drop to stand still immediately but will decrease rapidly. In particular, this sequential decrease in speed will occur more rapidly in comparison to the events described in relation to Fig. 5A.

Accordingly, in both circumstances, the decrease in speed of the winding tube may be detected. Accordingly, the operating parameter may be assessed for crossing the threshold associated with the respective operating condition; this being the closing or the opening direction. Due to the potentially different behavior under the distinct operating conditions, the first threshold and second threshold may be set at different values. Accordingly, the first and/or second thresholds may respectively relate to a threshold for the front side and for the rear side.

Thus, when assessing 404 the operating parameter against thresholds, or at least detecting, the first and/or second thresholds may be set at a predetermined deceleration value. When expressed as a percentage, this may e.g. be in the order of 0.5% - 7%, or 1% - 5%. It may also be expressed as an absolute drop in speed of e.g. 40 mm/s, 30 mm/s or other value; this in dependence of a regular operating speed of the winding tube and motor. However, as the operating parameter may also be software defined it may also be set as a predetermined absolute value or threshold condition. Furthermore, the operating parameter may be dimensionless. As long as it can be indicative of speed of the winding tube, and in particular a change therein.

As an example, the speed at which the rollo screen may open and/or close, may be in the order of 40-150 mm/s, and more often desired to be around 70 - 80 mm/s. As for another example, a threshold of 8% drop in speed may correspond to a e.g. drop from 75 to 69 mm/s.

As can be seen when comparing Figs. 5A and 5B, the drop in speed in a certain period time is different. In Fig. 5B, a similar drop in speed requires less time than in the situation explained in relation to Fig.5 A. This is illustrated by the slope of the graph.

Upon assessment that the first or second threshold is crossed, the trigger signal may be generated 405. This trigger signal may be used to control and operate the rollo assembly.

In a further embodiment, referring to Fig. 6, the method may further include stopping 601 the motor in response to the trigger signal. And in addition, or instead, may include operating 602 the motor in response to the trigger signal to drive the winding tube in a second rotational direction opposite to the first rotational direction. This latter step may be seen as reversing the motor. This opposite motion will move the operating beam in the opposite direction to counter sagging or stretching respectively and keep the rollo screen taut.

In view of the above, it will be understood that the threshold value may be set in accordance with the type of operating parameter measured. Hence, the threshold may be set for a decrease of speed within a predetermined period of time. Or the threshold may be set for a maximum deceleration. Which the motor for example should not exceed. Or the threshold may be set for a maximum torque increase. Furthermore, various of these type of values may be used in addition to one another.

Furthermore, a minimum value of the operating parameter may also be set. For example, a value indicating a speed that is too low, upon which the winding tube needs to be stopped anyway. This may serve as an additional safety, when for example a deceleration threshold or a time-dependent torque increase threshold is not detected.

In another example of a method in accordance with Fig. 4, the first threshold is set at a first value for a closing movement operating condition and the second threshold is set at a second value for an opening movement operating condition. Herein the first threshold value is different from the second threshold value.

Referring to Fig. 7, a flow chart of another example of a method for operating a rollo assembly is shown. In this example, also environmental conditions are taken in account. Thereto, the method includes determining, or receiving a determined, at least one environmental condition 704. And adjusting 706 the threshold value in accordance with the determined environmental condition. Environmental conditions are given, that is these are circumstantial and may influence the performance of the rollo assembly. For example, environmental conditions include the temperature of the motor, the temperature of surroundings, temperature of the vehicle interior, humidity, vehicle speed, and/or vehicle system operating voltage.

Each of these environmental conditions may have an influence of the performance and therewith on the operating parameter of the rollo assembly. For example, when cold such as at temperatures between -1 °C and -30 °C the motor may run slower but with more torque then when at regular temperatures between 0 °C and +30 °C. This may result in less deceleration. As a further example, the amount of friction experienced within the rollo assembly may increase with temperature. As another example, the length of the rollo screen may increase with temperature, with a risk of sagging with higher temperatures, such as above e.g. +40°C or +50°C, depending on the material of the cloth making up the rollo screen.

Referring to Fig. 7, the flowchart according to the method begins with starting 701 the motor, which is followed by setting the first and/or second threshold, and operating parameter monitoring 703 is performed. Environmental conditions 704 are determined and taken in account when setting the threshold. These environmental conditions 704 are also monitored for change 705 and if so, are used to adjust 706 the first and/or second threshold. The method keeps on monitoring 703 the operating parameter. Upon detection that the threshold is crossed 707, the trigger signal will be generated 708. In response to which the motor is stopped 709. This may be followed by a short reversal of the motor as already explained above.

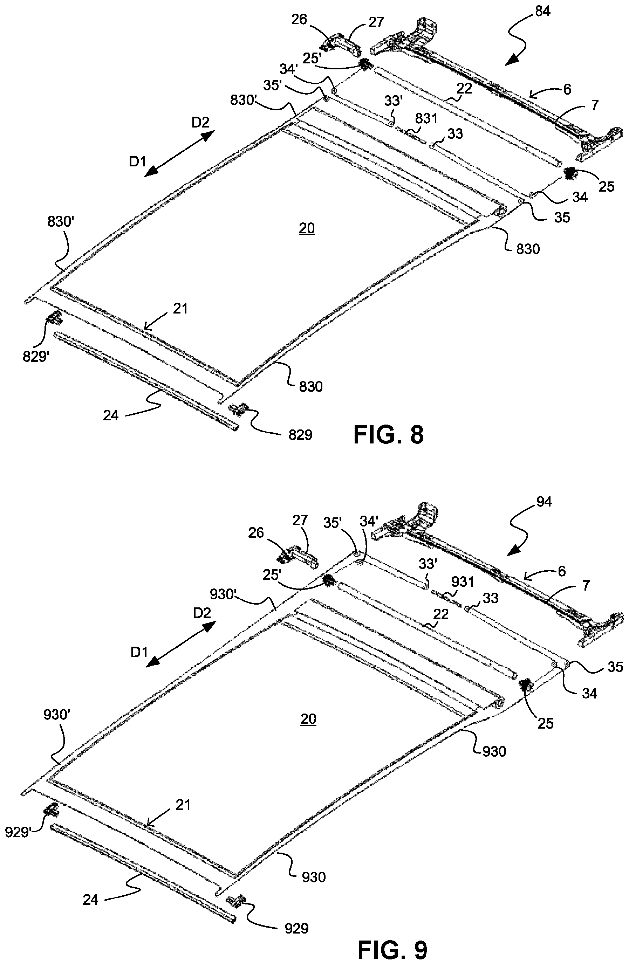

In Figs. 8-10, exploded views of other embodiments of direct driven rollo DDR assemblies are illustrated. In these, the same elements as in Figs. 2 and 3 have the same or similar reference numbers. The arrangement and variations of these same elements as described in relation to Figs. 2 and 3 applies similarly. The difference between each of these embodiments resides in a different layout i.e. configuration of the tensioning wires 830, 930, 130 and springlike element 831, 931 and 131, which each will now be described in further detail.

Referring to Figs. 8-10, each of the embodiments of the rollo assembly 84, 94, 104 again includes the rollo screen 20 and winding tube 22. The rollo screen 20 is again connected to the operating beam 24 and to the winding tube 22, and may be wound off and on the winding tube 22. The winding tube 22 is provided with the wire pulleys 25, 25' on opposite outer ends. At least one of the wire pulleys 25, 25' has the cavity into which the output shaft of the gearbox 26 may be releasable connected. And motor 27 drives rotation of the winding tube 22 via the gearbox 26.

Each of the embodiments of the rollo assembly 84, 94, 104 again includes the frame part 6 for carrying the winding tube 22 and pulleys 25, 25', the gear box 26 and motor 27, and for mounting the rollo guides (not shown). The frame part 6 enables alignment of the rollo guides, rollo screen 20 and winding tube prior to assembly in a vehicle roof; thereby creating another subassembly. The frame part 6 further includes at least one roll-off edge 7, intended to support the cloth of the rollo screen 20, similar as has been previously described in detail above.

Referring to Fig. 8, the springlike element 831 is arranged to the rear of the rollo assembly 84. Preferably positioned, relating to the z-direction, underneath the roll-off edge 7 of the frame part 6, while also, relating to the x-direction, just in front of the winding tube 22. The rollo assembly 84 includes two reversal pulleys 829, 829' and two tensioning wires 430,430' on respective sides of the rollo screen 20. In addition, further pairs of pulleys 33,33'; 34, 34' and 35,35' are provided, of which pulleys of each pair are arranged on respective sides of the rollo assembly, to guide the tensioning wires from the wire pulleys 25, 25' to the operating beam 24. The springlike element 831 is connected on each respective outer end to one pulley of the pair of pulleys 33, 33'. Each tensioning wire 830, 830' runs respectively from one of the wire pulleys 25, 25' forward over one of the pulleys of the pulley pair 34, 34' towards the spring 831 and the thereto connected respective pulley 33, 33'. And back from the spring 831 over one of the pulleys of the pulley pair 35, 35', to continue through or along the respective rollo guides around one of the reversal pulleys 829, 829' towards the operating beam 24.

Referring to Fig. 9, the springlike element 931 is arranged to the rear of the rollo assembly 94. In this embodiment, the springlike element 931, relating to the x-direction, is positioned just behind the winding tube 22. The spring 931 may be positioned, relating to the z-direction, underneath the roll-off edge 7 of the frame part 6, or it may be positioned underneath or within a rear beam of the frame part 6. The rollo assembly 94 includes two reversal pulleys 929, 929' and two tensioning wires 930,930' on respective sides of the rollo screen 20. Three additional pairs of pulleys 33,33'; 34, 34' and 35,35' are provided, of which pulleys of each pair are arranged on respective sides of the rollo assembly, to guide the tensioning wires from the wire pulleys 25, 25' to the operating beam 24. The springlike element 931 is connected on each respective outer end to one pulley of the pair of pulleys 33, 33'. Each tensioning wire 930, 930' runs respectively from one of the wire pulleys 25, 25' rearward over one of the pulleys of the pulley pair 34, 34' towards the spring 931 and the thereto connected respective pulley 33, 33'. And back from the spring 931 over one of the pulleys of the pulley pair 35, 35', to continue through or along the respective rollo guide around one of the reversal pulleys 929, 929' towards the operating beam 24.

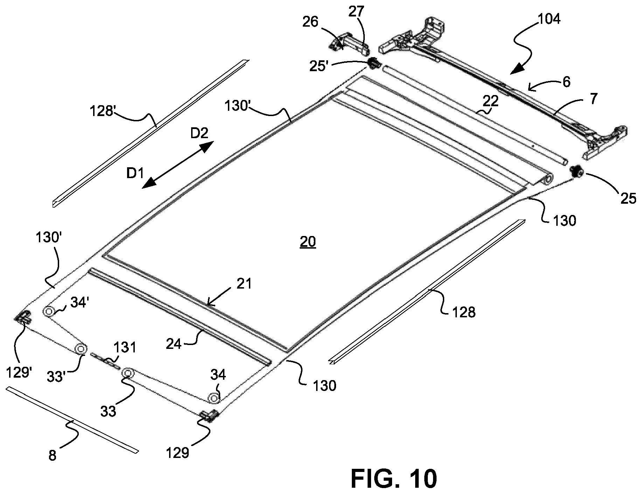

Referring to Fig. 10, the springlike element 131 is arranged to the front of the rollo assembly 104. In this embodiment, the springlike element 131is positioned, relating to the x-direction, in front of the opening 3 that is to be covered by the rollo screen in the closed position. Thereto, a subassembly consisting of the frame part 6 and rollo guides 128, 128' may further include a front frame strut 8. The springlike element 131 may be positioned near or in the front frame strut 8. The rollo assembly 104 includes two reversal pulleys 129, 129' and two tensioning wires 130,130' on respective sides of the rollo screen 20. Two additional pairs of pulleys 33,33' and 34, 34' are provided, of which pulleys of each pair are arranged on respective sides of the rollo assembly, to guide the tensioning wires from the wire pulleys 25, 25' to the operating beam 24. The springlike element 131 is connected on each respective outer end to one pulley of the pair of pulleys 33, 33'. Each tensioning wire 130, 130' runs respectively from one of the wire pulleys 25, 25' through or along the respective rollo guide 128, 128' around one of the reversal pulleys 129, 129' towards the springlike element 131 and the thereto connected respective pulley 33, 33'. And returns from the pulley 33, 33' over one of the pulleys of the pulley pair 34, 34' towards the outer end of the operating beam 24 to which it is connected.

Referring to Figs. 8-10, each tensioning wire 830, 830'; 930, 930'; 130, 130' is attached to one respective wire pulley 25, 25' with a first end, such that it may be wound onto and off said wire pulley 25, 25'. Each wire pulley 25, 25', which is attached to a first end of the respective tensioning wire 830, 830'; 930, 930'; 130, 130', is further equipped with spiral grooves, such that the tensioning wire 830, 830'; 930, 930'; 130, 130' may be wound onto and off said wire pulley 25, 25' in a controlled manner. The grooves are provided on a sloped part of the wire pulley 25, 25' and run in a spiral manner over the outer surface of the pulley. The tensioning wires 830, 830'; 930, 930'; 130, 130' are attached with their respective other, second ends, to the operating beam 24.

When moving from the closed position to a partially or fully opened position, the rollo screen 20 is wound up on the winding tube 22 when it is rotated by the motor 27, while the tensioning wires 830, 830'; 930, 930'; 130, 130' are wound off from the wire pulleys 25, 25'. Accordingly, the operating beam 24 is pulled by the rollo screen 20 that is being wound up on the winding tube 22 along the rollo guides 28 in the second direction D2.

When moving from the partially or fully opened position to the closed position, the rollo screen 20 is wound off from the winding tube 22 when it is rotated by the motor 27, while the tensioning wires 830, 830'; 930, 930'; 130, 130' are wound up on the wire pulleys 25, 25'. The operating beam 24 is pulled by the tensioning wires 830, 830'; 930, 930'; 130, 130' along the rollo guides 25 in the first direction D1.

Where appropriate, pulleys may take the form as rotatable wire guide elements, such as e.g. having a circular disk shape, or as fixed wire guide elements, as e.g. a groove, slot, notch or other suitable shape.

In each of the embodiments of Figs. 8-10, the springlike element is positioned at another location. This facilitates for a freedom of design and to optimize the space required for the rollo assembly. For example, as the springlike element is no longer located inside the operating beam, this operating beam may be structured much thinner or flatter in comparison to the embodiment of Fig. 3.

The method as disclosed herein may be applied for each of the variants of roller blind assemblies as described in relation to the Figs. 2-3, and 8-10, as each of the disclosed embodiments includes a springlike element that tensions the tensioning wires.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in expectedly any appropriately detailed structure. In particular, features presented and described in separate dependent claims may be applied in combination and any advantageous combination of such claims are herewith disclosed.

Further, the terms and phrases used herein are not intended to be limiting, but rather to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

## Claims

1. A method for operating a roller blind assembly, wherein the roller blind assembly (4) is configured for direct driving of a winding tube (22) and a rollo screen (20) movable between a closed position and an opened position, the method comprising:
operating (401) a motor to drive the winding tube of the rollo assembly with a first rotational direction;
setting (402) a first threshold based on an operating condition, the operating condition indicating whether the rollo screen moves in a first direction or a second direction;
monitoring (403) an operating parameter indicative of speed of the winding tube;
assessing (404) when the operating parameter crosses the first threshold;
generating (405) a trigger signal based on the assessment of the operating parameter.

2. Method according to claim 1, further comprising:
stopping the motor in response to the trigger signal; and/or
operating the motor in response to the trigger signal to drive the winding tube in a second rotational direction opposite to the first rotational direction.

3. Method according to claim 1 or 2, further comprising:
setting a second threshold based on the operating condition, the operating condition indicating whether the rollo screen moves in the first direction or a second direction, wherein the first threshold is associated with the first direction and the second threshold is associated with the second direction; and
assessing the operating parameter for crossing the first or second threshold in dependence of the operating condition.

4. Method according to any of claims 1 -3, wherein:
the operating parameter is monitored directly as speed of the winding tube; and/or
the operating parameter is monitored indirectly as speed of the motor; and/or
the operating parameter is monitored indirectly from torque of the motor; and/or
the operating parameter is monitored indirectly from motor drive signals.

5. Method according to any of the preceding claims, wherein:
the threshold is set for a decrease of speed within a predetermined period of time; and/or
the threshold is set for a maximum deceleration; and/ or
the threshold is set for a maximum torque increase.

6. Method according to claim 5, further comprising:
wherein the first threshold is set at a first value for a closing movement operating condition and the second threshold is set at a second value for an opening movement operating condition; and
wherein the first threshold value is different from the second threshold value.

7. Method according to any of the preceding claims, further comprising:
determining at least one environmental condition; and
adjusting the threshold value in accordance with the determined environmental condition.

8. Method according to claim 7, wherein the at least one environmental condition comprises:
temperature of the motor;
temperature of surroundings;
temperature of the vehicle interior;
vehicle speed;
vehicle system operating voltage.

9. Method according to claim 7 or 8, wherein:
setting the first and/or threshold starts from a predetermined minimum value; and
adjusting the threshold value is initially increased upward based on the determined environmental condition.

10. A control unit (11) for a roller blind assembly for a vehicle, configured for executing the method according to any of the preceding claims.

11. A roller blind assembly (4) for a vehicle, comprising:
a rollo screen (20) movable between a closed position and an opened position; and
a control unit (11) according to claim 10.

12. A roller blind assembly (4) for a vehicle, comprising:
a winding tube (22) configured to be directly driven by a motor (27);
a rollo screen (20) configured to be wound up and off on the winding tube (22) at one side and having an operating beam (24) at an opposite side;
the rollo screen (20) being movable between a closed position and an opened position by driving the winding tube (22); and
a control unit (11) according to claim 10.

13. A roller blind assembly (4) according to claim 12, further comprising:
wire pulleys (25, 25') on opposite outer ends of the winding tube (22);
a springlike element (31) within the operating beam (24); and
tensioning wires (30, 30') connected at first ends to one of the respective wire pulleys (25, 25') and connected at second ends to the springlike element (31).

14. A roller blind assembly (4) according to claim 12, further comprising:
wire pulleys (25, 25') on opposite outer ends of the winding tube (22);
a springlike element (31) having a pulley (33, 33') arranged on each respective outer end;
tensioning wires (30, 30') connected at first ends to one of the respective wire pulleys (25, 25') and connected at second ends to the operating beam (24); and
wherein the tensioning wires (30,30') run along the pulleys (33,33') of the springlike element (31), such that the springlike element (31) tensions the tensioning wires (30, 30').

15. A roof and roller blind assembly for a vehicle, comprising:
a roof assembly (1) comprising a transparent and/or movable roof panel (2a, 2b);
a roller blind assembly according to any of claims 11-14.
